Europäisches Patentamt

European Patent Office

Office européen des brevets

(11) Publication number: **0 379 809**
**A2**

(12) **EUROPEAN PATENT APPLICATION**

(21) Application number: **89313705.9**

(22) Date of filing: **29.12.89**

(51) Int. Cl.5: **C08G 59/42, C09D 163/00,**
**C08G 59/68**

(30) Priority: **29.12.88 JP 333991/88**

(43) Date of publication of application:
**01.08.90 Bulletin 90/31**

(84) Designated Contracting States:
**DE GB IT**

(71) Applicant: **NIPPON PAINT CO., LTD.**
**1-2, Oyodokita 2-chome Kita-ku**
**Osaka-shi(JP)**

(72) Inventor: **Uenaka, Akimitsu**
**7-35 Senriyama-nishi 2-chome**
**Suita-shi Osaka-fu(JP)**
Inventor: **Toyoda, Yuji**
**8-31 Kasuga-cho**
**Takatsuki-shi Osaka-fu(JP)**
Inventor: **Inoue, Tsugunori**
**2-716 Nishi Sotojima-cho 6-banchi**
**Moriguchi-shi Osaka-fu(JP)**
Inventor: **Tsutsui, Koichi**
**13-4 Osumigaoka 5-chome Tanabe-cho**
**Tsuzuki-gun Kyoto-fu(JP)**

(74) Representative: **Lamb, John Baxter et al**
**MARKS & CLERK 57/60 Lincoln's Inn Fields**
**London WC2A 3LS(GB)**

(54) **A heat-curing type resinuous composition and powder coating containing the same.**

(57) A heat-curable resinous composition comprises

(1) at least one polycarboxylic acid component selected from:

(A) carboxyl group containing resins having 2 or more carboxyl groups in the molecule and having a number average molecular weight of from 1,000 to 30,000 and

(B) polycarboxylic acids having 2 or more carboxyl groups in the molecule and having a number average molecular weight of less that 1,000; and

(2) at least one polyepoxy component selected from:

(C) epoxy resinins having 2 or more epoxy groups in the molecule and having a number average molecular weight of from 1,000 to 30,000; and

(D) polyepoxy compounds having 2 or more epoxy groups in the molecule and having a number average molecular weight of less than 1,000, with the Proviso that the combination of (B) and (D) is excluded; and further containing a monoalkyl stannate as a hardening catalyst.

# A heat-curing type resinous composition and powder coating containing the same

The present invention relates to a heat-curing type resinous composition and powder coating containing the same. More specifically, the invention relates to a heat-curing type resinous composition and powder coating which are specifically useful in coil coating.

A heat-curing type coating composition based on the combination of carboxyl group containing resin as polyester resin, acrylic resin and the like and epoxy resin or epoxy compound has been widely used in the form of powder coating. However, such a powder coating has been believed to be improper to the application requiring a short time of baking operation as in coil coating and the like.

For the purpose of curing acceleration, attempts has been made to add an imidazole compound (as catalyst) to the resinous composition of carboxy group containing polyester resin and epoxy resin, and however, such composition is likewise improper for coil coating because there is a marked yellowing of baked coating.

It is, therefore, an object of the invention to provide a heat-curing type resinous composition for coating use which is curable at a short baking and capable of resulting a coating with the least yellowing.

An additional object of the invention is to provide a powder coating which is specifically useful for coil coating.

Summary of the invention

According to the invention, the abovementioned objects can be attained by providing.

A heat-curing type resinous composition for coating use comprising

(1) at least one polycarboxylic acid component selected from the group consisting of

(A) carboxyl group containing resin having in its molecule 2 or more carboxyl groups and having a number average molecular weight of 1,000~30,000, and

(B) polycarboxylic acid having in its molecule 2 or more carboxyl groups and having a number average molecular weight of less than 1,000, and (2) at least one polyepoxy component selected from the group consisting of

(C) epoxy resin having in its molecule 2 or more epoxy groups and having a number average molecular weight of 1,000~30,000, and

(D) polyepoxy compound having in its molecule 2 or more epoxy groups and having a number average moleuclar weight of less than 1,000, with the proviso that the combination of (B) and (D) is excluded, and further containing monoalkyl stannate as a hardening catalyst and a powder coating containing as main ingredients, carboxyl group containing resin having in its molecule 2 or more carboxyl groups and having a number average molecular weight of 1,000~30,000, polyepoxy compound having in its molecule 2 or more epoxy groups and having a number average molecular weight of less than 1,000, and monoalkyl stannate. In the present resinous composition, as the component (A), any of acidic resins may be satisfactorily used providing having in its molecule 2 or more carboxyl groups and having a number average molecular weight of 1,000~30,000. Examples of such acidic resins are polyester resin, acrylic resin and the like. A carboxyl group containing polyester resin may be easily obtained, in a conventional way, by the polycondensation of polyhydric alcohol and excess amounts of polybasic acid. Examples of polyhydric alcohols are ethyleneglycol, propyleneglycol, 1,3-butanediol, 1,4-butanediol, 1,6-hexanediol, diethylene glycol, dipropylene glycol, 1,4-cyclohexane dimethanol, 1,4-cyclohexane diol, neopentyl glycol, isopentyl glycol, bishydroxyethyl terephthalate, hydrogenated bisphenol A, hydrogenated bisphenol A-alkylene oxide addition product, trimethylol ethane, trimethylol propane, glycerine, pentaerythritol and the like, and examples of polybasic acids are terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methyl tetrahydrophthalic acid, hexahydrophthalic acid and their reactive derivatives, 4,4'-biphenylene.

Such carboxylic acids as having 4,4'-biphenylene or other mesogenic group capable of affording liquid-crystalline properties may also be used.

A carboxyl group containing acrylic resin may be obtained by polymerizing, by means of conventional emulsion polymerization, suspension polymerization, bulk polymerization and the like, carboxyl group containing $\alpha,\beta$-ethylenically unsaturated monomer and other $\alpha,\beta$-ethylenically unsaturated monomer(s) or by reacting a polybasic acid anhydride with a hydroxyl group containing acrylic resin.

2

Examples of carboxyl group containing monomers are acrylic acid, methacrylic acid, crotonic acid, maleic acid, fumaric acid, itaconic acid and the like, and examples of other $\alpha,\beta$-ethylenically unsaturated monomers are hydroxyl group containing monomers as 2-hydroxyethyl acrylate, hydroxypropyl acrylate, 2-hydroxyethyl methacrylate, hydroxypropyl methacrylate, hydroxybutyl acrylate, hydroxybutyl methacrylate, allyl alcohol, methallyl alcohol and the like; nitrogen containing alkyl acrylates or methacrylates as dimethyl aminoethyl acrylate, dimethyl aminoethyl methacrylate and the like; polymerizable amides as acryl amide, methacryl amide and the like; polymerizable nitriles as acrylonitrile, methacrylonitrile and the like; alkyl acrylates or methacrylates as methyl acrylate, methyl methacrylate, ethyl acrylate, ethyl methacrylate, n-butyl acrylate, n-butyl methacrylate, 2-ethylhexyl acrylate and the like; polymerizable aromatic compounds as styrene,$\alpha$-methyl styrene, vinyl toluene, t-butyl styrene and the like; $\alpha$-olefins as ethylene, propylene and the like; vinyl compounds as vinyl acetate, vinyl propionate and the like; diene compounds as butadiene, isoprene and the like; glycidyl group containing monomers as glycidyl acrylate, glycidyl methacrylate and the like.

As the poly basic acid, any of the polycarboxylic acids already stated in connection with the polyester resin may be satisfactorily used.

These resins (A) must fulfil the conditions that 2 or more carboxyl groups are contained in their respective molecule and that number average molecular weight is within a range of 1,000~30,000. The former is essential for giving a three-dimensional cross-linked coating by the curing reaction of applied resin composition. If the number average molecular weight of said resin is less than 1,000, there is a shortage in mechanical strength of the cured coating and if it exceeds over the upper limit of 30,000, it is difficult to obtain a good appearance coating due to the deficient flow property of the applied coating.

In this invention, as the (B) component, is used a polycarboxylic acid having in its molecule 2 or more carboxyl groups and having a number average molecular weight of less than 1,000. Examples of such acids are succinic acid, adipic acid, pimelic acid, suberic acid azelaic acid, sebacic acid, decanedicarboxylic acid, brassylic acid, terephthalic acid, phthalic acid, trimellitic acid, pyromellitic acid, dimer acid and the like.

This (B) component acid, however, can never be used in the combination with hereinafter stated polyepoxy compound (D) having a number average molecular weight of less than 1,000, alone, because of resulting a coating with deficient mechanical strength.

Among the polyepoxy component which is used together with said carboxyl group containing resin (A) and/or polycarboxylic acid (B), the epoxy resin (C) having in its molecule 2 or more epoxy groups and having a number average molecular weight of 1,000~30,000 may be selected from the following groups.

(1) polyglycidyl ethers obtained by the reaction of phenolic compounds as 2,2-bis(4′-hydroxyphenyl) propane (the so-called bisphenol A), novolac type polyfunctional phenol, cresol and the like, with epichlorohydrin, as, for example, diglycidyl ether of bisphenol A, diglycidyl ether of resorcinol, triglycidyl ether of phloroglucinol, triglycidyl ether of trihydroxy dibiphenyl, polyglycidyl ether of phenol-formaldehyde-novolac, polyglycidyl ether of o-cresol-formaldehyde-novolac and the like.

(2) polyglycidyl ethers obtained by the reaction of alcohols and epichlorohydrin, as, for example, diglycidyl ether of butanediol, diglycidyl ether of polypropylene glycol, diglycidyl ether of neopentyl glycol, triglycidyl ether of glycerine, triglycidyl ether of trimethylol propane, tetraglycidyl ether of pentaerythritol, polyglycidyl ether of sorbitol and the like;

(3) polyglycidyl esters obtained by the reaction of carboxyl group containing compound as adipic acid, phthalic acid and the like, with epichlorohydrin, as, for example, diglycidyl isophthalate, diglycidyl phthalate, diglycidyl ester of linoleic dimer acid, triglycidyl isocyanurate, tetraphenylol ehtane epoxy and the like;

(4) styrene oxide derived from mono-unsaturated compound, internal epoxy type compound obtained by oxidation of intermolecular double bond,

(5) resins obtained by the reaction of (A) component or (B) component with a polyepoxy compound.

The number average molecular weight of said resin (C) must be in a range of 1,000~30,000. This is because, if the molecular weight of said resin is less than 1,000, there is a problem in film strength, and if it exceeds over 30,000, there is an undesirable decrease in flowability of coating. Thus, in this invention, the curing type resinous composition comprises, as main ingredients, (A) component resin and/or compound having 2 or more carboxyl groups and (B) component resin and/or compound having 2 or more epoxy groups, and besides that, contains, as an essential component, monoalkyl stannate which is solid at room temperature, as a hardening acceleration catalyst.

Examples of such monoalkyl stannates are monobutyl stannate, monooctyl stannate and the like. Among them, particularly preferable member is monobutyl stannate.

This catalyst is a solid at room temperatures. Usually, it is present in the resinous composition in the form of fine powders having an average diameter of 10$\mu$ or less and most preferably 5$\mu$ or less, prepared

by subjecting the same to Jet mill or melt-kneading with a resin and pulverizing the solid mass. The adding amount of said catalyst is usually in a range of 0.01 ot 10% by weight, preferably 0.1 to 5% by weight, of the total weight of the resinous composition. This is because, if the catalyst amount is less than 0.01%, it is hardly possible to expect the working effect of said catalyst, and if the amount is over 10%, there is no increase in the catalystic effect intended.

The present resinous composition has the characteristic features such that regardless of the presence (or absence) of solvent, carboxyl group containing resin or compound can never react with the epoxy group containing resin or compount at an elevated temperature just required for fusing the employed resins, let says about 100° C, but at a more higher temperature, there occurs tha reaction in a very short period of time, as, for example, within 30 minutes at 160° C and 1 minute at 250° C, giving a three-dimensional cross-linked coating, of network structure. Therefore, the present resinous composition is very useful for various coating compositions and especially coil-coating use coating composition.

In obtaining a solvent type coating composition, the defined components of the present resinous composition and merely dissolved or dispersed in a conventional organic solvent for coating use.

In the case of a powder coating which is specifically important from the hygienic and economical points of view, the present reinous composition may be melt-knead, cooled and subjected to pulverizing or may be dissolved in a solvent and then subjected to spray-drying to form powder.

For powder coating application, it is highly desired that the carboxyl group containig resin (A) and the epoxy group containing resin (C) each is selected from the members having a glass transition temperature of 40~120° C.

This is because, if the glass transition temperature of either one of the selected resins is less than 40° C, there is a tendency that blocking resistance of the resulted powder coating will get worse, and if it exceeds over the limit of 120° C, there results an insufficient flowability of coating. For the improvements of blocking resistance and flow property usually encountered in powder coating, it is highly recommended that base resin be selected from the members with liquid crystalline properties.

For formulating a coating composition, the following additives may be compounded with the present resinous composition, as desired.

(a) surface conditioner:
as long chain alkyl acrylates, polysiloxanes as dimethyl siloxane, and the like

(b) color pigment:
as titanium dioxide, iron oxide, iron yellow, carbon black and other inorganic pigments, phthalocyanine blue, phthalocyanine green, quinacridone red pigment and other organic pigments

(c) plasticizer:
as polyalkylene polyol, phthalic acid ester and the like

(d) UV absorber, antioxidant:

(e) defoaming agent:
as benzoin and the like

The invention shall be now more fully explained in the following examples.

Examples

The respective materials shown in Table 1 each in indicated amounts were, after being pre-milled, molten together at 100° C and then cooled. Thus obtained mass was then pulverized to obtain a powder coating.

Onto a steel plate (0.6mm thickness) previously subjected to a zinc phosphate treatment, the abovementioned powder coating was applied by an electrostatic spraying means and heat-cured to obtain a coated plate. Coating properties were then evaluated as follows.

Test methods and evaluation standards:

(1) Degree of cross-linking:
xylene rubbing test was carried out with the coated plate
O... good
x... no good

(2) Levelling property:
Baked plate was evaluated by naked eyes

4

O... good
x... no good
(3) Yellowing:
b value of the baked plate was determined by using SM color computer (manufactured by Suga Shikenki K.K.) the higher the b value, the larger the yellowing.
The test results are also shown in Table 1.

Table 1

| | | Example | | | | Comp. Ex. | | Ex. | Comp. Ex. | |
|---|---|---|---|---|---|---|---|---|---|---|
| | | 1 | 2 | 3 | 4 | 1 | 2 | 5 | 3 | 4 |
| Polyester resin | A | 10 | - | - | - | 10 | 10 | - | - | - |
| Polyester resin | B | - | - | 10.7 | - | - | - | - | - | - |
| acryl resin | C | - | 10 | - | - | - | - | - | - | - |
| acryl resin | D | - | - | - | 10 | - | - | - | - | - |
| epoxy compound | E | 1.01 | 1.01 | - | - | 1.01 | 1.01 | 1.01 | 1.01 | 1.01 |
| decane dicarboxylic acid | | - | - | 0.61 | 0.61 | - | - | - | - | - |
| monobutyl stannate | | 0.15 (2 $\mu$) | 0.15 (2 $\mu$) | 0.15 (2 $\mu$) | 0.15 (2 $\mu$) | - | - | 0.24 | - | - |
| Curxol C-172 | F | - | - | - | - | - | 0.03 | - | - | 0.05 |
| CR-50 | G | 6.1 | 6.1 | 6.3 | 5.9 | 6.1 | 6.1 | - | - | - |
| benzoin | H | 0.11 | 0.11 | 0.11 | 0.11 | 0.11 | 0.11 | - | - | - |
| YF-3919 | I | 0.04 | 0.04 | 0.04 | 0.04 | 0.04 | 0.04 | 0.10 | 0.10 | 0.10 |
| Polyester resin solution | J | - | - | - | - | - | - | 29.8 | 29.8 | 29.8 |
| curing conditions | | 250°C x 5min. | 250°C x 5min. | 250°C x 5min. | 250°C x 5min. | 250°C x 5min. | 250°C x 5min. | 230°C x 1min. | 230°C x 1min. | 230°C x 1min. |
| degree of cross-linking | | O | O | O | O | x | x | O | x | O |
| b value | | 1.5 | 1.4 | 1.7 | 1.6 | 1.5 | 4.0 | 1.6 | 1.5 | 3.8 |

The materials used are as follows:
Polyester A:
Yupica coat D-19-5 (trademark, Nihon Yupica K.K., acid value = 29, Mn = 5,500)
Polyester B:
obtained by the reaction of polyester A with ERL-4206 (polyepoxide, manufactured by Union Carbid Corp.) (epoxy equivalent = 72, Mn = 8,000)
acryl resin C,D:
prepared by a conventional method
acryl resin C... acid value = 30, Mn = 5,000

acryl resin D... epoxy equivalent = 77, Mn = 6,000
Epoxy compound E:
Epicoat YD-128 (trademark, Tohto Kasei K.K., epoxy equivalent = 190, Mn = 500)
YF-3919 I:
silicone compound (Toshiba Silicone)
Polyester resin solution J:
prepared by a conventional method
acid value = 20, Mn = 8,000, solid % = 50%

## Claims

1. A heat-curing type resinous coating composition comprising
(1) at least one polycarboxylic acid component selected from:
(A) carboxyl group containing resins having 2 or more carboxyl groups in the molecule and having a number average molecular weight of from 1,000 to 30,000 and
(B) polycarboxylic acids having 2 or more carboxyl groups in the molecule and having a number average molecular weight of less that 1,000; and
(2) at least one polyepoxy component selected from:
(C) epoxy resinins having 2 or more epoxy groups in the molecule and having a number average molecular weight of from 1,000 to 30,000, and
(D) polyepoxy compounds having 2 or more epoxy groups in the molecule and having a number average molecular weight of less than 1,000, with the proviso that the combination of (B) and (D) is excluded;
and further containing a monoalkyl stannate as a hardening catalyst.

2. A composition according to claim 1 wherein the monoalkyl stannate is monobutyl stannate.

3. A powder coating containing as main ingredients, a carboxyl groups - containing resin (A) as defined in claim 1, a polyepoxy compound (D) as defined in claim 1, and a monoalkyl stannate.